# EUROPÄISCHE PATENTSCHRIFT

(11) **EP 2 383 480 B1**
(45) Veröffentlichungstag und Bekanntmachung des Hinweises auf die Patenterteilung: **03.10.2012**
(21) Anmeldenummer: 10004567.3
(22) Anmeldetag: 30.04.2010
(51) Int. Cl.: F16C 33/10, F16H 57/08, F16H 57/04

(54) **Planetengetriebe für eine Windkraftanlage**
Planetary gear for a wind power system
Train épicycloïdal pour une éolienne

(43) Veröffentlichungstag der Anmeldung: 02.11.2011
(73) Patentinhaber: Winergy AG, 46562 Voerde (DE)
(72) Erfinder: Dinter, Ralf Martin, Dr., 45888 Gelsenkirchen (DE); Klein-Hitpass, Arno, 52074 Aachen (DE); Meyer, Thomas, 52223 Stolberg (DE)
(74) Vertreter: Maier, Daniel Oliver

(56) Entgegenhaltungen:
- EP-A2- 1 403 558
- EP-A2- 1 431 575
- WO-A2-2009/141140
- DE-A1- 4 441 258
- DE-A1-102008 010 307
- GB-A- 1 550 789

## Beschreibung

Getriebe für Windkraftanlagen sind bisher überwiegend mit Wälzlagern ausgeführt. Gleitlager kommen bislang nur sehr selten zum Einsatz. Gründe hierfür sind vielfach vorherrschende instationäre Betriebsbedingungen und temporär äußerst niedrige Gleitgeschwindigkeiten bei gleichzeitiger Extrembeanspruchung der Gleitlager. Herkömmliche Gleitlager werden vor allem bei Einsatzbedingungen mit hohen bis sehr hohen Drehzahlen verwendet. Aufgrund dessen werden üblicherweise für Lagerstellen in Windkraftgetrieben nahezu ausschließlich Wälzlager verwendet. Aus JP 2006 170413 A1 und CN 101581284 A ist bekannt, auch Gleitlager zur Lagerung von Planeten in Getrieben für Windkraftanlagen zu verwenden.

Bekannte Gleitlagerwerkstoffe sind beispielsweise Weißmetalle mit Legierungsbestandteilen und Bronze-Legierungen. Im Allgemeinen werden Gleitlager in Industrieanwendungen mit einen Schmierspalt von etwa 15-20 µm im Betriebspunkt ausgelegt. Als zulässiger mittlerer dynamischer Druck wird von Lagerherstellern etwa 5MPa für Weißmetall angegeben.

Aus GB 1 550 789 A, welche als der nächste Stand der Technik angesehen wird, ist ein Planetengetriebe mit einem Sonnenrad, einem Hohlrad und einem Planetenträger bekannt, in dem mehrere Planetenräder gelagert sind. Des weiteren sind mehrere Radialgleitlager zur Lagerung der Planetenräder vorgesehen, die jeweils eine Hülse aus einem Gleitlagerwerkstoff umfassen. Die Hülse ist entweder als Innenring auf einer Planetenradachse befestigt oder als Außenring in einer Bohrung eines Planetenrades montiert. Dabei ist ein zugehöriger Lageraußen- oder Lagerinnenring entweder durch die Bohrung des Planetenrades oder durch die Planetenradachse gebildet. Darüber hinaus umfaßt das in GB 1 550 789 A beschriebene Planetengetriebe mehrere Axialgleitlagern zur Lagerung der Planetenräder, die jeweils ein erstes Lagerelement aus einem Gleitlagerwerkstoff umfassen. Der Gleitlagerwerkstoff ist an einer Kontaktfläche zwischen einer Planetenträgerwange und einer Stirnseite eines Planetenrades entweder auf die Planetenträgerwange oder auf die Stirnseite des Planetenrades aufgebracht. Ein zugehöriges zweites Lagerelement ist entweder durch die Stirnseite des Planeten oder durch die Planetenträgerwange gebildet.

Der vorliegenden Erfindung liegt die Aufgabe zugrunde, ein Planetengetriebe für eine Windkraftanlage zu schaffen, dessen Planetenräderlagerung kostengünstig herstellbar ist und eine sehr hohe Lebensdauer aufweist.

Diese Aufgabe wird erfindungsgemäß durch ein Planetengetriebe mit den in Anspruch 1 angegebenen Merkmalen gelöst. Vorteilhafte Weiterbildungen sind in den abhängigen Ansprüchen angegeben.

Das erfindungsgemäße Planetengetriebe für eine Windkraftanlage umfaßt neben zumindest einem Sonnenrad, einem Hohlrad und einem Planetenträger, in dem mehrere Planetenräder gelagert sind, mehrere Radialgleitlager zur Lagerung der Planetenräder. Die Radialgleitlager umfassen jeweils eine Hülse aus einem Gleitlagerwerkstoff, die entweder als Innenring auf einer Planetenradachse befestigt oder als Außenring in einer Bohrung eines Planetenrades montiert ist. Dabei ist ein zugehöriger Lageraußen- oder Lagerinnenring entweder durch die Bohrung des Planetenrades oder durch die Planetenradachse gebildet. Außerdem sind mehrere Axialgleitlager zur Lagerung der Planetenräder vorgesehen, die jeweils ein erstes Lagerelement aus einem Gleitlagerwerkstoff umfassen. Der Gleitlagerwerkstoff ist an einer Kontaktfläche zwischen einer Planetenträgerwange und einer Stirnseite eines Planetenrades entweder auf die Planetenträgerwange oder auf die Stirnseite des Planetenrades aufgebracht. Ein zugehöriges zweites Lagerelement ist entweder durch die Stirnseite des Planeten oder durch die Planetenträgerwange gebildet. Auf diese Weise können sowohl Axial- als auch Radialgleitlager für Planetenräder eines Windkraftanlagengetriebes kostengünstig hergestellt werden und bieten bei ausreichender Schmierung eine nahezu unbegrenzte Lebensdauer.

Zur Druckschmierung der Axial- bzw. Radialgleitlager ist erfindungsgemäß ein Ölverteilerring vorgesehen, der eine Sonnenradachse radial umgibt und eine Verbindung zu einem Ölzuführungskanal in einem Getriebegehäuse aufweist. Im Planetenträger ist zumindest ein Ölverteilungskanal ausgebildet, der mit dem Ölverteilerring verbunden ist und an einer Schmierungsstelle für ein Planetenradlager endet. In den Planetenradachsen sind jeweils zwei von einem zur Planetenradachse parallelen Ölverteilungskanalabschnitt ausgehende, sich radial erstreckende Bohrungen vorgesehen. Die Hülsen weisen erfindungsgemäß jeweils zwei Schmierstoffsammelvorrichtungen auf, die beispielsweise durch Aussparungen an der Hülse gebildet sind. Zwischen den beiden Schmierstoffsammelvorrichtungen weisen die Hülsen jeweils eine umlaufende Schmierstoffversorgungsnut auf. Auf diese Weise kann eine besonders wirksame Schmierung der Radialgleitlager realisiert werden.

Entsprechend einer bevorzugten Ausgestaltung der vorliegenden Erfindung ist zur Tauchschmierung der Axial- bzw. Radialgleitlager jeweils eine Bohrung in den Planetenradachsen vorgesehen, die ein bei Eintauchen der jeweiligen Planetenradachse in einen Ölsumpf füllbares Ölreservoir bildet. Darüber hinaus können in den Planetenradachsen jeweils zwei vom Ölreservoir ausgehende, sich radial erstreckende Bohrungen vorgesehen sein, die an der Hülse enden.

Die vorliegende Erfindung wird nachfolgend an einem Ausführungsbeispiel anhand der Zeichnung näher erläutert. Es zeigt
- Figur 1: eine schematische Darstellung eines Planetengetriebes,
- Figur 2: einen Längsschnitt durch einen Planetenträger mit Planetenrad entsprechend einer ersten Ausführungsvariante,
- Figur 3: eine Hülse für ein Radialgleitlager eines Planetenrads gemäß Figur 2,
- Figur 4: einen Querschnitt durch den Planetenträger gemäß Figur 2,
- Figur 5: ein Lagerelement für ein Axialgleitlager des Planetenrads gemäß Figur 2 im Profil,
- Figur 6: das Lagerelement gemäß Figur 5 in Draufsicht,
- Figur 7: ein alternatives Lagerelement für ein Axialgleitlager des Planetenrads gemäß Figur 2 im Profil,
- Figur 8: das Lagerelement gemäß Figur 7 in Draufsicht,
- Figur 9: einen Längsschnitt durch einen Planetenträger mit Planetenrad entsprechend einer zweiten Ausführungsvariante.

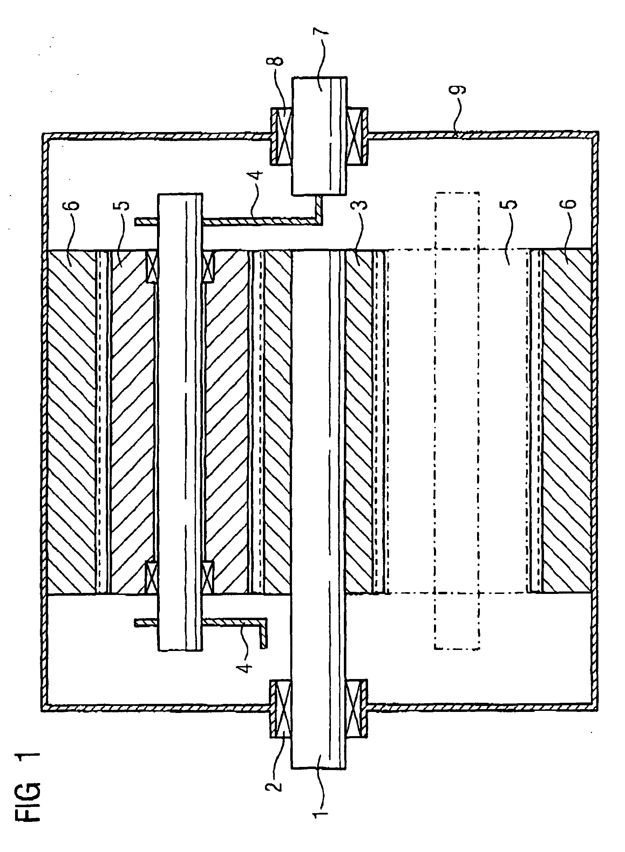

Entsprechend der schematischen Darstellung gemäß Figur 1 umfaßt ein Planetengetriebe zumindest ein mit einer ersten Getriebewelle 1 verbundenes Sonnenrad 3, ein Hohlrad 6 und einem Planetenträger 4, in dem mehrere Planetenräder 5 gelagert sind und der mit einer zweiten Getriebewelle 7 verbunden ist. Das Hohlrad 6 kann in ein- oder mehrteiliges Getriebegehäuse 9 integriert sein, das auch Lagersitze für Lager 2, 8 der ersten und zweiten Getriebewelle 1, 7 aufweist. Die Lagersitze können beispielsweise in Gehäusedeckel integriert sein.

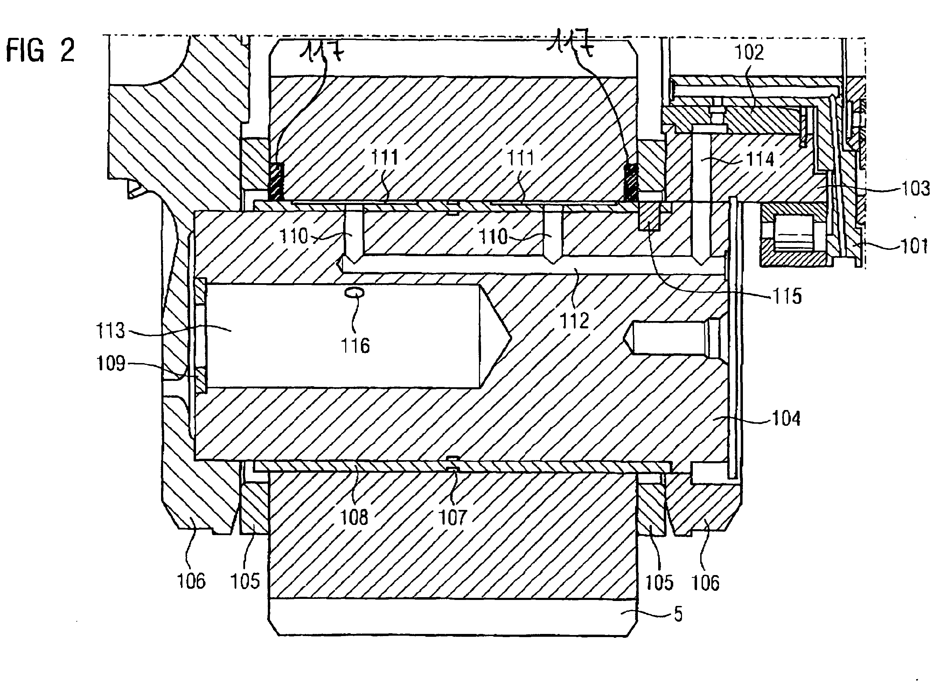

In Figur 2 ist ein Planetenträger 5 mit Planetenrad 5 für ein Planetengetriebe gemäß Figur 1 im Längsschnitt dargestellt. Zur Lagerung der Planetenräder 5 sind mehrere Radialgleitlager vorgesehen, die jeweils eine Hülse 108 aus einem Gleitlagerwerkstoff umfassen. Entsprechend einer ersten Ausführungsvariante ist die Hülse 108 als Innenring auf einer Planetenradachse 104 befestigt. Ein zugehöriger Lageraußenring ist durch eine Bohrung des Planetenrades 5 aus einem Verzahnungswerkstoff gebildet.

Die Hülse 108 kann kraft-, form- oder stoffschlüssig mit der Planetenradachse 104 verbunden sein. Ist die Hülse 108 stoffschlüssig mit der Planetenradachse 104 verbunden, wird sie vorzugsweise durch eine Beschichtung der Planetenradachse 104 mit einem Gleitlagerwerkstoff gebildet. ßei einer kraftschlüssigen Verbindung kann eine zusätzliche Fixierung der Hülse 108 über einen oder mehrere Sicherungsstifte 115 erfolgen.

Die Planetenradachse 104 ist kraft- bzw. formschlüssig durch Planetenträgerwangen 106 fixiert und wird über ein nicht explizit dargestelltes beliebiges Sicherungselement gegen Verdrehen gesichert. Das Planetenrad 5 wird über zwei Axialgleitlager 105 axial geführt. Die beiden Axialgleitlager 105 sind wahlweise kraft- bzw. formschlüssig mit den Planetenträgerwangen 106 verbunden. Durch Stirnseiten des Planetenrads 5 werden entsprechend Gegenlaufflächen gebildet. Somit umfassen die Axialgleitlager zur Lagerung der Planetenräder 5 jeweils ein erstes Lagerelement aus einem Gleitlagerwerkstoff, der an einer Kontaktfläche zwischen einer Planetenträgerwange 106 und einer Stirnseite eines Planetenrades 5 entweder auf die Planetenträgerwange 106 oder auf die Stirnseite des Planetenrades 5 aufgebracht sein kann. Dementsprechend ist ein zugehöriges zweites Lagerelement entweder durch die Stirnseite des Planetenrads 5 oder durch die Planetenträgerwange 106 gebildet.

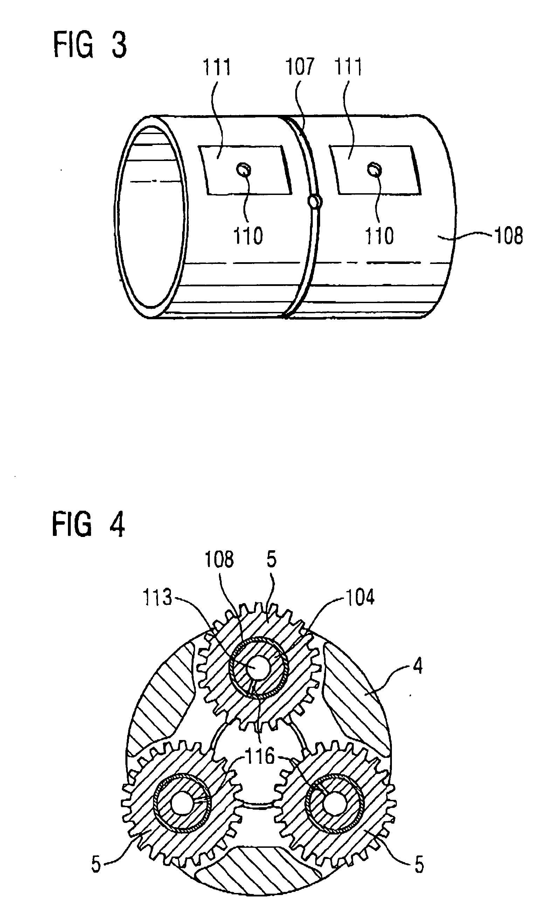

Zur Druckschmierung der Axial- und Radialgleitlager ist ein Ölverteilerring 102 vorgesehen, der eine Sonnenradachse radial umgibt. Der Ölverteilerring 102 weist eine Verbindung zu einem Ölzuführungskanal in einem Getriebegehäuse oder zu einem am Getriebegehäuse befestigten raumfesten Stator 101 auf. Im vorliegenden Ausführungsbeispiel ist der Ölverteilerring 102 radial zwischen dem Stator 101 und einem ringförmigen Vorsprung 103 des Planetenträgers 4 angeordnet. Darüber hinaus sind im Planetenträger 4 mehrere Ölverteilungskanalabschnitte 110, 112, 114 vorgesehen, die einerseits eine Verbindung zum Ölverteilerring 102 und andererseits eine Verbindung zu Schmierungsstellen für Planetenradlager aufweisen. Ein erster Ölverteilungskanalabschnitt 114 verläuft in einer Planetenträgerwange 106 und geht in einen zweiten Ölverteilungskanalabschnitt 112 über, der parallel zur Planetenradachse 104 verläuft. Zwischen dem zweiten Ölverteilungskanalabschnitt 112 und der Hülse 108 erstrecken sich zwei weitere Ölverteilungskanalabschnitte 110. Die beiden weiteren Ölverteilungskanalabschnitte 110 durchdringen dabei die Planetenradachse 104 und die Hülse 108. Dies ist auch der perspektivischen Darstellung der Hülse 108 in Figur 3 zu entnehmen. Die Hülse 108 weist in zumindest zwei Bereichen, in denen die weiteren Ölverteilungskanalabschnitte 110 enden, jeweils eine Schmierstoffsammelvorrichtung 111 auf. Die Schmierstoffsammelvorrichtungen 111 sind durch Aussparungen an der Hülse 108 gebildet. Zwischen den beiden Schmierstoffsammelvorrichtungen 111 weist die Hülse 108 eine umlaufende Schmierstoffversorgungsnut 107 auf,

An den Stirnseiten des Planetenrads 5 sind zur Sicherstellung eines ausreichenden Schmierfilms im jeweiligen Radialgleitlager Staukanten 117 vorgesehen. Die Staukanten 117 können im Bereich der Bohrungen an das Planetenrad 5 oder in Umfangsrichtung an die Planetenradachsen 104 angeformt sein.

Zur Tauchschmierung der Axial- und Radialgleitlager ist eine Bohrung 113 in der Planetenradachse 104 vorgesehen, die ein durch Eintauchen der Planetenradachse 104 in einen Ölsumpf füllbares Ölreservoir bildet. Wie auch Figur 4 zu entnehmen ist, weist die Planetenradachse 104 zumindest eine vom Ölreservoir ausgehende, sich radial erstreckende Bohrung 116 auf, die an der Hülse 108 endet. In diesem Bereich ist an der Hülse 108 außerdem eine Schmierstoffsammeltasche vorgesehen, die den in Figur 3 dargestellten Schmierstoffsammelvorrichtungen 111 entspricht und durch eine Aussparung an der Hülse 108 gebildet ist. Damit zur Tauchschmierung verwendetes Öl nach einem Austritt der Planetenradachse 104 aus einem Ölsumpf im Ölreservoir gehalten wird, ist am Planetenträger 4 oder in der Planetenradachse 104 eine Staukante 109 bzw. ein Staublech vorgesehen. Durch die Staukante 109 wird der Durchmesser der Bohrung 113 für das Ölreservoir abschnittsweise verringert.

Insgesamt kann die Schmierung der Gleitlager auf die 3 nachstehenden genannten Arten erfolgen.
1. Druckschmierung für den belasteten Betrieb des Getriebes. Die Gleitlager werden über Drucköl von der Planetenradachse 104 versorgt. Dabei erfolgt die Druckölzufuhr ca. 90° vor dem Maximum der Belastungszone des Lagers.
2. Tauchschmierung für den belastungsfreien Betrieb des Getriebes. Die Gleitlager werden über ein Ölreservoir in der Planetenradachse 104 mit Öl versorgt. Das Ölreservoir wird durch das Eintauchen der Planetenradachse 104 in den Ölsumpf mit Öl gefüllt und leitet dieses Öl an das Gleitlager weiter. Die Ölzufuhr erfolgt ca. 110° vor dem Maximum der Belastungszone des Lagers. Durch die hydraulische Verbindung der Druckschmierung und der Tauchschmierung wird ein Ablauf des Öls sichergestellt.
3. Ölspeicherung für den belastungsfreien Betrieb des Getriebes. Die Radialgleitlager sind mit Ölstaukanten an den Stirnseiten der Planetenräder 5 ausgerüstet, so daß immer ein definierter Ölstand im Radialgleitlager verbleibt. Damit ist eine Schmierung der Radialgleitlager im belastungsfreien Zustand gewährleistet.

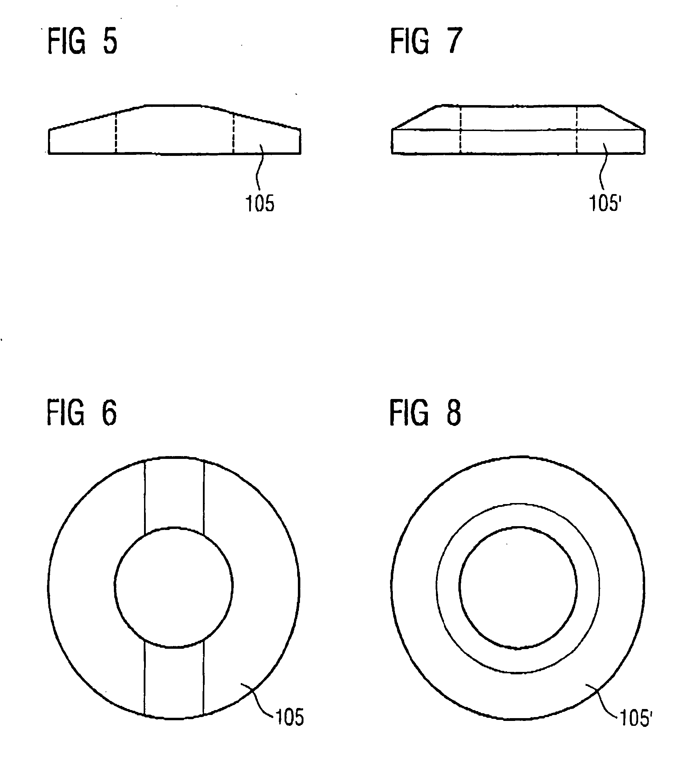

Entsprechend Figur 5 bis 8 können die jeweils im Profilverlauf' und Draufsicht dargestellten Axialgleitlager 105, 105' eine durch eine satteldachartige oder rotationssymmetrische Korrektur ihres Profilverlaufs bestimmte geometrische Form aufweisen. Auf diese Weise sind die Axialgleitlager 105, 105' an im Windkraftanlagenbetrieb auftretende Verformungen von Planeten, Planetenachsen oder Planetenträgern angepaßt.

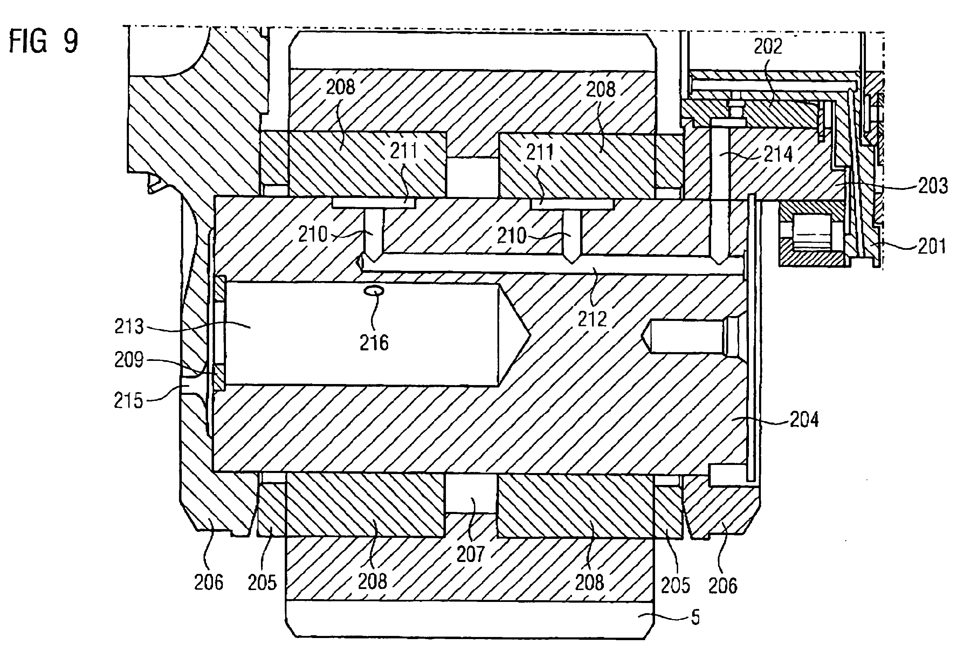

Entsprechend der in Figur 9 dargestellten zweiten Ausführungsvariante ist die Hülse 208 bzw. eine Buchse als Außenring eines Radialgleitlagers in einer Bohrung eines Planetenrades 5 montiert. Dementsprechend ist ein zugehöriger Lagerinnenring durch die Planetenradachse 204 gebildet. Die Hülse 208 kann kraft-, form- oder stoffschlüssig mit dem Planetenrad 5 verbunden sein. Ist die Hülse 208 stoffschlüssig mit dem Planetenrad 5 verbunden, wird sie vorzugsweise durch eine Beschichtung des Planetenrads 5 mit einem Gleitlagerwerkstoff gebildet. Darüber hinaus kann die Hülse 208 ein- oder mehrteilig ausgeführt sein.

Die Hülse 208 weist zu den Planetenträgerwangen 206 orientierte Stirnflächen auf, welche als erste Lagerelemente eines Axialgleitlagers dienen. Die beiden Stirnflächen laufen jeweils gegen Führungsscheiben 205, welche als zweite Lagerelemente kraft- bzw. formschlüssig mit den Planetenträgerwangen 206 verbunden sind. Die zweiten Lagerelemente können grundsätzlich auch durch die beiden Planetenträgerwangen 206 selbst gebildet sein. Die Planetenradachse 204 ist kraft- bzw. formschlüssig durch Planetenträgerwangen 206 fixiert und wird über ein nicht explizit dargestelltes beliebiges Sicherungselement gegen Verdrehen gesichert.

Wie bei der ersten Ausführungsvariante ist zur Druckschmierung der Axial- und Radialgleitlager ist ein Ölverteilerring 202 vorgesehen. Der Ölverteilerring 202 weist eine Verbindung zu einem raumfesten Stator 201 auf und ist radial zwischen dem Stator 102 und einem ringförmigen Vorsprung 203 des Planetenträgers 4 angeordnet. Darüber hinaus sind im Planetenträger 4 mehrere Ölverteilungskanalabschnitte 210, 212, 214 vorgesehen, die einerseits eine Verbindung zum Ölverteilerring 202 und andererseits eine Verbindung zu Schmierungsstellen für Planetenradlager aufweisen.

Die Hülse 208 weist in zumindest zwei Bereichen, in denen die Ölverteilungskanalabschnitte 210 enden, jeweils eine Schmierstoffsammelvorrichtung 211 auf. Die Schmierstoffsammelvorrichtungen 211 sind durch Aussparungen an der Planetenradachse 204 oder an der Hülse 208 gebildet. Die Hülse 208 ist im vorliegenden Ausführungsbeispiel zweiteilig ausgestaltet und umfaßt zwei Hülsenabschnitte. Zwischen den beiden Hülsenabschnitten 211 ist eine umlaufende Schmierstoffversorgungsnut 207 gebildet.

Damit zur Tauchschmierung verwendetes Öl nach einem Austritt der Planetenradachse 204 aus einem Ölsumpf in einem durch eine Bohrung 213 in der Planetenradachse 204 gebildeten Ölreservoir gehalten wird, sind am Planetenträger 4 und an der Bohrung 213 Staukante 209, 215 vorgesehen. Wie bei der ersten Ausführungsvariante weist die Planetenradachse 204 zumindest eine vom Ölreservoir ausgehende, sich radial erstreckende Bohrung 216 auf, die an der Hülse 208 endet.

Die Radialgleitlager können als ein- oder mehrteilige Kreiszylinderlager oder als Zitronenlager ausgeführt sein. Für die Axialgleitlager ist eine Ausführung als ein- oder mehrteilige Spurscheiben, ein- oder mehrteilige Keilflächenlager für eine Drehrichtung, ein- oder mehrteilige Keilflächenlager für 2 Drehrichtungen, Kippsegmentlager für eine oder zwei Drehrichtungen oder als Axiallager mit Kreisgleitschuhen möglich.

Für die Axial- und Radialgleitlager werden bevorzugt bleifreie Legierungen als Gleitlagerwerkstoff verwendet. Verzahnungen sowie Lager können mit einem öl geschmiert werden, das vorzugsweise einen Viskositätsgrad von mindestens 320 aufweist und entsprechend einer bevorzugten Ausführungsform mit einem Extra-Pressure-Additiv versehen ist.

Als Gleitlagerwerkstoffe für die Axial- und Radialgleitlager können auch Kupfer-Zink-Legierungen mit einem Zinkanteil zwischen 6 % und 40 % verwendet werden. Als weitere Legierungselemente können Al, Ni, Mn, Si und Fe vorgesehen sein. Alternativ dazu können für die Axial- und Radialgleitlager Kupfer-Zinn-Legierungen mit einem Zinnanteil zwischen 4 % und 12 % als Gleitlagerwerkstoff verwendet werden. Als weitere Legierungselemente sind dabei Ni und Zn möglich, Alternativ zu Kupfer-Zink-Legierungen oder Kupfer-Zinn-Legierungen können als Gleitlagerwerkstoffe für die Axial- und Radialgleitlager auch Aluminium-Zinn-Legierungen mit einem Zinnanteil zwischen 6 % und 40 % verwendet werden.

Eine kostengünstige Gleitlagerrealisierung ergibt sich, wenn der der Gleitlagerwerkstoff jeweils auf einen Stahlstützkörper walzplattiert ist. Zusätzlich oder alternativ dazu können die Axial- und Radialgleitlager eine PVD-Beschichtung aufweisen. In einer obersten Beschichtungsebene können die Axial-und Radialgleitlager darüber hinaus eine synthetische oder galvanische Einlaufschicht aufweisen.

Die Anwendung der vorliegenden Erfindung ist nicht auf die hier beschriebenen Ausführungsbeispiele beschränkt.

## Patentansprüche

1. Planetengetriebe für eine Windkraftanlage mit
- zumindest einem Sonnenrad (3), einem Hohlrad (6) und einem Planetenträger (4), in dem mehrere Planetenräder (5) gelagert sind,
- mehreren Radialgleitlagern zur Lagerung der Planetenräder (5), die jeweils eine Hülse (108;208) aus einem Gleitlagerwerkstoff umfassen, die entweder als Innenring auf einer Planetenradachse (104;204) befestigt oder als Außenring in einer Bohrung eines Planetenrades (5) montiert ist, wobei ein zugehöriger Lageraußen- oder Lagerinnenring entweder durch die Bohrung des Planetenrades (5) oder durch die Planetenradachse (104;204) gebildet ist,
- mehreren Axialgleitlagern (105;205) zur Lagerung der Planetenräder (5), die jeweils ein erstes Lagerelement aus einem Gleitlagerwerkstoff umfassen, der an einer Kontaktfläche zwischen einer Planetenträgerwange (106;206) und einer Stirnseite eines Planetenrades (5) entweder auf die Planetenträgerwange (106;206) oder auf die Stirnseite des Planetenrades (5) aufgebracht ist, wobei ein zugehöriges zweites Lagerelement entweder durch die Stirnseite des Planetenrades (5) oder durch die Planetenträgerwange (106;206) gebildet ist,
**dadurch gekennzeichnet,**
**daß** zur Druckschmierung der Axial- und/oder Radialgleitlager ein Ölverteilerring (102;202), der eine Sonnenradachse radial umgibt und eine Verbindung zu einem Ölzuführungskanal in einem Getriebegehäuse (9) aufweist, und zumindest ein Ölverteilungskanal (110;112;114 ; 210;212;214) im Planetenträger (4) vorgesehen sind, der mit dem Ölverteilerring (102;202) verbunden ist und an einer Schmierungsstelle für ein Planetenradlager endet,
und **daß** in den Planetenradachsen (104;204) jeweils zwei von einem zur Planetenradachse (104;204) parallelen Ölverteilungskanalabschnitt (112;212) ausgehende, sich radial erstreckende Bohrungen vorgesehen sind,
und **daß** die Hülsen (108;208) jeweils zwei Schmierstoffsammelvorrichtungen (111;211) aufweisen, und bei dem die Hülsen (108;208) zwischen den beiden Schmierstoffsammelvorrichtungen (111;211) jeweils eine umlaufende Schmierstoffversorgungsnut (107;201) aufweisen.

2. Planetengetriebe nach Anspruch 1,
bei dem zur Tauchschmierung der Axial- und/oder Radialgleitlager jeweils eine Bohrung (113;213) in den Planetenradachsen (104;204) vorgesehen ist, die ein durch Eintauchen der jeweiligen Planetenradachse (104;204) in einen Ölsumpf füllbares Ölreservoir bildet.

3. Planetengetriebe nach Anspruch 2,
bei dem in den Planetenradachsen (104;204) jeweils eine vom Ölreservoir ausgehende, sich radial erstreckende Bohrung (116,216) vorgesehen ist, die an der Hülse (108;208) endet.

4. Planetengetriebe nach Anspruch 3,
bei dem die Hülsen (108;208) jeweils in einem Bereich, in dem die vom Ölreservoir ausgehende Bohrung (116;216) endet, eine Schmierstoffsammelvorrichtung (111;211) aufweisen.

5. Planetengetriebe nach Anspruch 4,
bei dem die Schmierstoffsammelvorrichtung (111) durch eine Aussparung an der Hülse (108) gebildet ist.

6. Planetengetriebe nach einem der Ansprüche 2 bis 5,
bei dem die Planetenradachsen (104;204) jeweils an einer Stirnseite eine den Durchmesser der Bohrung (113;213) für das jeweilige Ölreservoir abschnittsweise verringernde Staukante (109;209) aufweisen.

7. Planetengetriebe nach einem der Ansprüche 1 bis 6,
bei dem an Stirnseiten der Planetenräder (5) zur Sicherstellung eines ausreichenden Schmierfilms im jeweiligen Radialgleitlager Staukanten (117) vorgesehen sind.

8. Planetengetriebe nach Anspruch 7,
bei dem die Staukanten (117) jeweils im Bereich der Bohrungen an die Planetenräder (5) oder in Umfangsrichtung an die Planetenradachsen (104) angeformt sind.

9. Planetengetriebe nach einem der Ansprüche 1 bis 8,
bei dem die Hülsen (108;208) jeweils kraft-, form- oder stoffschlüssig mit der jeweiligen Planetenradachse (104;204) oder dem jeweiligen Planetenrad (5) verbunden sind.

10. Planetengetriebe nach einem der Ansprüche 1 bis 8,
bei dem die Hülsen (108;208) jeweils stoffschlüssig mit der jeweiligen Planetenradachse (104;204) oder dem jeweiligen Planetenrad (5) verbunden und durch eine Beschichtung der jeweiligen Planetenradachse (104;204) oder des jeweiligen Planetenrads (5) mit einem Gleitlagerwerkstoff gebildet sind.

11. Planetengetriebe nach einem der Ansprüche 1 bis 10,
bei dem für die Axial- und/oder Radialgleitlager bleifreie Legierungen als Gleitlagerwerkstoff verwendet werden.

12. Planetengetriebe nach Anspruch 11,
bei dem Verzahnungen und/oder Lager mit einem Öl geschmiert sind, das einen Viskositätsgrad von mindestens 320 aufweist.

13. Planetengetriebe nach einem der Ansprüche 11 oder 12,
bei dem Verzahnungen und/oder Lager mit einem Öl geschmiert sind, das mit einem Extra-Pressure-Additiv versehen ist.

14. Planetengetriebe nach einem der Ansprüche 1 bis 13,
bei dem für die Axial- und/oder Radialgleitlager Kupfer-Zink-Legierungen mit einem Zinkanteil zwischen 6 % und 40 % als Gleitlagerwerkstoff verwendet werden.

15. Planetengetriebe nach Anspruch 14,
bei dem als weitere Legierungselemente Al, Ni, Mn, Si und/oder Fe vorgesehen sind.

16. Planetengetriebe nach einem der Ansprüche 1 bis 13,
bei dem für die Axial- und/oder Radialgleitlager Kupfer-ZinnLegierungen mit einem Zinnanteil zwischen 4 % und 12 % als Gleitlagerwerkstoff verwendet werden.

17. Planetengetriebe nach Anspruch 16,
bei dem als weitere Legierungselemente Ni und/oder Zn vorgesehen sind.

18. Planetengetriebe nach einem der Ansprüche 1 bis 13,
bei dem für die Axial- und/oder Radialgleitlager Aluminium-Zinn-Legierungen mit einem Zinnanteil zwischen 6 % und 40 % als Gleitlagerwerkstoff verwendet werden.

19. Planetengetriebe nach einem der Ansprüche 13 bis 18,
bei dem der Gleitlagerwerkstoff jeweils auf einen Stahlstützkörper walzplattiert ist.

20. Planetengetriebe nach einem der Ansprüche 1 bis 19,
bei dem die Axial- und/oder Radialgleitlager eine PVD-Beschichtung aufweisen.

21. Planetengetriebe nach einem der Ansprüche 1 bis 20,
bei dem die Axial- und/oder Radialgleitlager in einer obersten Beschichtungsebene eine synthetische oder galvanische Einlaufschicht aufweisen.

22. Planetengetriebe nach einem der Ansprüche 1 bis 21,
bei dem die Axialgleitlager und/oder Radialgleitlager eine aus einer Verformung angrenzender Bauteile abgeleitete Korrektur ihrer geometrischen Form aufweisen.

23. Planetengetriebe nach einem der Ansprüche 1 bis 22,
bei dem die Axialgleitlager eine durch eine satteldachartige oder rotationssymmetrische Korrektur ihres Profilverlaufs bestimmte geometrische Form aufweisen.

## Claims

1. Planetary gear mechanism for a wind power plant having at least one sun gear (3), one internal gear (6) and one planetary carrier (4) in which a plurality of planetary gears (5) are mounted,
- a plurality of radial sliding bearings for bearing the planetary gears (5), which radial sliding bearings each comprise a sleeve (108; 208) which is made of a sliding bearing material, and is either attached as an inner ring to a planetary gear axle (104; 204) or is mounted as an outer ring in a drilled hole in a planetary gear (5), wherein an associated outer bearing ring or inner bearing ring is formed either by the drilled hole in the planetary gear (5) or by the planetary gear axle (104; 204),
- a plurality of axial sliding bearings (105; 205) for bearing the planetary gears (5) which each comprise a first bearing element which is made of a sliding bearing material which is applied to a contact face between a planetary carrier cheek (106; 206) and an end side of a planetary gear (5), either to the planetary carrier cheek (106; 206) or to the end side of the planetary gear (5), wherein an associated second bearing element is formed either by the end side of the planetary gear (5) or by the planetary carrier cheek (106; 206),
**characterized in that**, in order to perform pressure lubrication of the axial sliding bearings and/or radial sliding bearings, have an oil distributor ring (102; 202) which radially surrounds a sun gear axle and has a connection to an oil supply duct in a transmission housing (9), and at least one oil distribution duct (110; 112; 114; 210; 212; 214) are provided in the planetary carrier (4) and is connected to the oil distributor ring (102; 202) and ends at a lubrication point for a planetary gear bearing and **in that** in each case two radially extending drilled holes which start from an oil distribution duct section (112; 212) which is parallel to the planetary gear axle (104; 204), are provided in the planetary gear axles (104; 204), and **in that** the sleeves (108; 208) each have two lubricant collecting devices (111; 211), and in which the sleeves (108; 208) each have a circumferential lubricant supply groove (107; 207) between the two lubricant collecting devices (111; 211).

2. Planetary gear mechanism according to Claim 1,
in which, in order to perform splash lubrication of the axial sliding bearings and/or radial sliding bearings, in each case a drilled hole (113; 213) is provided in the planetary gear axles (104; 204), which drilled hole forms an oil reservoir which can be filled by dipping the respective planetary gear axle (104; 204) into an oil sump.

3. Planetary gear mechanism according to Claim 2,
in which in each case a radially extending drilled hole (116; 216) which starts from the oil reservoir and ends at the sleeve (108; 208) is provided in the planetary gear axles (104; 204).

4. Planetary gear mechanism according to Claim 3,
in which the sleeves (108; 208) each have a lubricant collecting device (111; 211) in a region in which the drilled hole (116; 216) which starts from the oil reservoir ends.

5. Planetary gear mechanism according to Claim 4,
in which the lubricant collecting device (111) is formed by a recess on the sleeve (108).

6. Planetary gear mechanism according to one of Claims 2 to 5,
in which the planetary gear axles (104; 204) each have, on an end side, a collecting edge (109; 209) which reduces, in certain sections, the diameter of the drilled hole (113; 213) for the respective oil reservoir.

7. Planetary gear mechanism according to one of Claims 1 to 6,
in which collecting edges (117) are provided on end sides of the planetary gears (5) in order to ensure a sufficient lubricating film in the respective radial sliding bearing.

8. Planetary gear mechanism according to Claim 7,
in which the collecting edges (117) are each integrally formed onto the planetary gears (5) in the region of the drilled holes or onto the planetary gear axles (104) in the circumferential direction.

9. Planetary gear mechanism according to one of Claims 1 to 8,
in which the sleeves (108; 208) are each connected in a frictionally locking, positively locking or materially joined fashion to the respective planetary gear axle (104; 204) or the respective planetary gear (5).

10. Planetary gear mechanism according to one of Claims 1 to 8,
in which the sleeves (108; 208) are each connected in a materially joined fashion to the respective planetary gear axle (104; 204) or the respective planetary gear (5), and are formed by coating the respective planetary gear axle (104; 204) or the respective planetary gear (5) with a sliding bearing material.

11. Planetary gear mechanism according to one of Claims 1 to 10,
in which lead-free alloys are used as the sliding bearing material for the axial sliding bearings and/or radial sliding bearings.

12. Planetary gear mechanism according to Claim 11,
in which toothing arrangements and/or bearings are lubricated with an oil which has a degree of viscosity of at least 320.

13. Planetary gear mechanism according to either of Claims 11 and 12,
in which toothing arrangements and/or bearings are lubricated with an oil which is provided with an extra-pressure additive.

14. Planetary gear mechanism according to one of Claims 1 to 13,
in which copper-zinc alloys with a proportion of zinc between 6% and 40% are used as the sliding bearing material for the axial sliding bearings and/or radial sliding bearings.

15. Planetary gear mechanism according to Claim 14,
in which Al, Ni, Mn, Si and/or Fe are provided as the further alloy elements.

16. Planetary gear mechanism according to one of Claims 1 to 13,
in which copper-tin alloys with a proportion of tin between 4% and 12% are used as the sliding bearing material for the axial sliding bearings and/or radial sliding bearings.

17. Planetary gear mechanism according to Claim 16,
in which Ni and/or Zn are provided as the further alloy elements.

18. Planetary gear mechanism according to one of Claims 1 to 13,
in which aluminum-tin alloys with a proportion of tin between 6% and 40% are used as the sliding bearing material for the axial sliding bearings and/or radial sliding bearings.

19. The planetary gear mechanism according to one of Claims 13 to 18,
in which the sliding bearing material is respectively roll clad onto a steel supporting body.

20. Planetary gear mechanism according to one of Claims 1 to 19,
in which the axial sliding bearings and/or radial sliding bearings have a PVD coating.

21. Planetary gear mechanism according to one of Claims 1 to 20,
in which the axial sliding bearings and/or radial sliding bearings have a synthetic or galvanic running-in layer in a top coating level.

22. Planetary gear mechanism according to one of Claims 1 to 21,
in which the axial sliding bearings and/or radial sliding bearings have a correction of their geometric shape which is derived from a deformation of adjoining components.

23. Planetary gear mechanism according to one of Claims 1 to 22,
in which the axial sliding bearings have a geometric shape which is determined by a pitched-roof-like or rotationally symmetrical correction of their profile.

## Revendications

1. Train épicycloïdal pour une éolienne comprenant
- au moins une roue ( 3 ) solaire, une roue ( 6 ) à denture intérieure et un porte-satellite ( 4 ), dans lequel plusieurs roues ( 5 ) satellites sont montées,
- plusieurs paliers lisses radiaux pour le montage des roues ( 5 ) satellites, qui comprennent respectivement un manchon ( 108, 208 ) en un matériau pour palier lisse, qui est fixé en tant qu'anneau intérieur sur un axe ( 104, 204 ) de roue satellite ou est monté en tant qu'anneau extérieur dans un trou d'une roue ( 5 ) satellite, un anneau extérieur de palier ou un anneau intérieur de palier associé étant formé par le trou de la roue ( 5 ) satellite ou par l'axe ( 104, 204 ) de la roue satellite,
- plusieurs paliers ( 105, 205 ) lisses axiaux pour le montage des roues ( 5 ) satellites, qui comprennent respectivement un premier élément de palier en un matériau pour palier lisse, qui est déposé sur une surface de contact entre une joue ( 106, 206 ) du porte-satellite et un côté frontal d'une roue ( 5 ) satellite, soit sur la joue ( 106, 206 ) du porte-satellite, soit sur le côté frontal de la roue ( 5 ) satellite, un deuxième élément de palier associé étant formé par le côté frontal de la roue ( 5 ) satellite ou par la joue ( 106, 206 ) du porte-satellite,
**caractérisé**
**en ce que**, pour le graissage sous pression des paliers lisses axiaux et/ou radiaux, il est prévu un anneau ( 102, 202 ) formant répartiteur d'huile, qui entoure radialement l'axe de la roue solaire et qui comporte une liaison avec un canal d'apport d'huile dans un carter ( 9 ) du train et au moins un canal ( 110, 112, 114, 210, 212, 214 ) de répartition d'huile dans le porte-satellite ( 4 ), qui est relié à l'anneau ( 102, 202 ) formant répartiteur d'huile et qui se termine en un point de graissage d'un palier de roue satellite,
et **en ce qu'**il est prévu dans les axes ( 104, 204 ) de roue satellite respectivement deux trous s'étendant radialement et partant d'un tronçon ( 112, 212 ) de canal de répartition d'huile parallèle à l'axe ( 104, 204 ) de roue satellite,
et **en ce que** les manchons ( 108, 208 ) ont respectivement deux dispositifs ( 111, 211 ) de collecte de lubrifiant et dans lequel les manchons ( 108, 208 ) ont respectivement une rainure ( 107, 207 ) périphérique d'alimentation en lubrifiant entre les deux dispositifs ( 111, 211 ) de collecte de lubrifiant.

2. Train épicycloïdal suivant la revendication 1,
dans lequel, pour le graissage par barbotage des paliers lisses axiaux et/ou radiaux, il est prévu respectivement un trou ( 113, 213 ) dans les axes ( 104, 204 ) de roue satellite, qui forme un réservoir d'huile pouvant être rempli par immersion des axes ( 104, 204 ) respectifs de roue satellite dans un bain d'huile.

3. Train épicycloïdal suivant la revendication 2,
dans lequel il est prévu dans les axes ( 104, 204 ) de roue satellite respectivement un trou ( 116, 216 ), qui s'étend radialement, qui part du réservoir d'huile et qui finit sur le manchon ( 108, 208 ).

4. Train épicycloïdal suivant la revendication 3,
dans lequel les manchons ( 108, 208 ) ont un dispositif ( 111, 211 ) de collecte de lubrifiant dans une zone dans laquelle finit le trou ( 116, 216 ) partant du réservoir d'huile.

5. Train épicycloïdal suivant la revendication 4,
dans lequel le dispositif ( 111 ) de collecte de lubrifiant est formé par un évidement sur le manchon ( 108 ).

6. Train épicycloïdal suivant l'une des revendications 2 à 5,
dans lequel les axes ( 104, 204 ) de roue satellite ont respectivement sur un côté frontal un bord ( 109, 209 ) d'accumulation diminuant par tronçon le diamètre du trou ( 113, 213 ) pour le réservoir d'huile respectif.

7. Train épicycloïdal suivant l'une des revendications 1 à 6,
dans lequel il est prévu, sur les côtés frontaux des roues ( 5 ) satellites, des bords ( 117 ) d'accumulation pour assurer un film lubrifiant suffisant dans le palier lisse radial respectif.

8. Train épicycloïdal suivant la revendication 7,
dans lequel les bords ( 117 ) d'accumulation sont formés respectivement dans la région des trous sur les roues ( 5 ) satellites ou dans la direction périphérique sur les axes ( 104 ) de roue satellite.

9. Train épicycloïdal suivant l'une des revendications 1 à 8,
dans lequel les manchons ( 108, 208 ) sont reliés respectivement par complémentarité de force, de forme ou de matière à l'axe ( 104, 204 ) de roue satellite respectif ou à la roue ( 5 ) satellite respective.

10. Train épicycloïdal suivant l'une des revendications 1 à 8,
dans lequel les manchons ( 108, 208 ) sont reliés respectivement par complémentarité de matière à l'axe ( 104, 204 ) de roue satellite respectif ou à la roue ( 5 ) satellite respective et sont formés par un revêtement de l'axe ( 104, 204 ) de roue satellite respectif ou de la roue ( 5 ) satellite respective d'un matériau de palier lisse.

11. Train épicycloïdal suivant l'une des revendications 1 à 10,
dans lequel il est utilisé des alliages sans plomb comme matériau de palier lisse pour les paliers lisses axiaux et/ou radiaux.

12. Train épicycloïdal suivant la revendication 11,
dans lequel des dentures et/ou des paliers sont lubrifiés par une huile qui a un degré de viscosité d'au moins 320.

13. Train épicycloïdal suivant la revendication 11 ou 12,
dans lequel des dentures et/ou des paliers sont lubrifiés par une huile qui est pourvue d'un additif extra-pressure.

14. Train épicycloïdal suivant l'une des revendications 1 à 13,
dans lequel il est utilisé comme matériau de palier lisse pour les paliers lisses axiaux et/ou radiaux des alliages de cuivre et de zinc ayant une proportion de zinc comprise entre 6% et 40%.

15. Train épicycloïdal suivant la revendication 14,
dans lequel il est prévu comme autre élément d'alliage Al, Ni, Mn, Si et/ou Fe.

16. Train épicycloïdal suivant l'une des revendications 1 à 13,
dans lequel il est utilisé comme matériau de palier lisse pour les paliers lisses axiaux et/ou radiaux des alliages de cuivre et d'étain ayant une proportion d'étain comprise entre 4% et 12%.

17. Train épicycloïdal suivant la revendication 16,
dans lequel il est prévu comme autre élément d'alliage Ni et/ou Zn.

18. Train épicycloïdal suivant l'une des revendications 1 à 13,
dans lequel il est utilisé comme matériau pour palier lisse pour les paliers lisses axiaux et/ou radiaux des alliages d'aluminium et d'étain ayant une proportion d'étain comprise entre 6% et 40%.

19. Train épicycloïdal suivant l'une des revendications 13 à 18,
dans lequel le matériau de palier lisse est plaqué par laminage respectivement sur un corps d'appui en acier.

20. Train épicycloïdal suivant l'une des revendications 1 à 19,
dans lequel les paliers lisses axiaux et/ou radiaux ont un revêtement en PVD.

21. Train épicycloïdal suivant l'une des revendications 1 à 20,
dans lequel les paliers lisses axiaux et/ou radiaux ont une couche de pénétration synthétique ou galvanique dans un plan de revêtement le plus haut.

22. Train épicycloïdal suivant l'une des revendications 1 à 21,
dans lequel les paliers lisses axiaux et/ou les paliers lisses radiaux ont une correction de leur forme géométrique provenant d'une déformation d'éléments constitutifs voisins.

23. Train épicycloïdal suivant l'une des revendications 1 à 22,
dans lequel les paliers lisses axiaux ont une forme géométrique déterminée par une correction de type en toit à deux versants ou de révolution de leur profil.
